# EUROPÄISCHE PATENTSCHRIFT

(11) **EP 1 256 544 B1**
(45) Veröffentlichungstag und Bekanntmachung des Hinweises auf die Patenterteilung: **25.07.2007**
(21) Anmeldenummer: 02010036.8
(22) Anmeldetag: 06.05.2002
(51) Int. Cl.: C01B 3/38, C01B 3/48, B01J 8/04, C01B 3/58, H01M 8/06, F28D 7/00

(54) **Apparat zur Erzeugung von Wasserstoff und Verfahren zur allothermen Dampfreformierung**
Apparatus for generation of hydrogen and process for allothermic steam reforming
Dispositif de génération d'hydrogène et procédé de reformage allothermique à la vapeur

(30) Priorität: 07.05.2001 DE 10122016
(43) Veröffentlichungstag der Anmeldung: 13.11.2002
(73) Patentinhaber: Viessmann Werke GmbH & Co KG, 35107 Allendorf (DE)
(72) Erfinder: Heikrodt, Klaus, Dr., 35108 Allendorf (DE); Britz, Peter, Dr., 35108 Allendorf (DE)
(74) Vertreter: Wolf, Günter

(56) Entgegenhaltungen:
- EP-A- 0 575 883
- EP-A- 1 094 031
- DE-A- 19 954 871

## Beschreibung

Die Erfindung betrifft ein Verfahren zur allothermen Dampfreformierung gemäß dem Oberbegriff des Patentanspruchs 1.

In der Brennstoffzellentechnologie werden zur Bereitstellung von Wasserstoff sogenannte Reformer eingesetzt, die Kohlenwasserstoffgas und Wasser in Wasserstoff und weitere Reformer-Produkte (Kohlendioxid und Kohlenmonoxid) umwandeln. Häufig wird dafür ein allotherm arbeitender Dampfreformer verwendet, d. h. ein Reformer, dem die erforderliche Wärmeenergie für den Reformierungsprozess von außen zugeführt wird (im Gegensatz zur sogenannten autothermen Reformierung, bei der die erforderliche Wärmeenergie im Reformer durch Verbrennen des Kohlenwassserstoffgases freigesetzt wird), was beispielsweise mit einem aus der Heiztechnik bekannten Gasbrenner erfolgt, der zweckmäßiger Weise mit dem gleichen Kohlenwasserstoffgas (beispielsweise Erdgas) wie der Reformer betrieben wird.

Bezüglich des relevanten Standes der Technik wird auf folgende Druckschriften verwiesen:

Nach der DE 37 40 865 A1 ist eine Vorrichtung und ein Verfahren zur Erzeugung von Wasserstoff bekannt, bei dem das Kohlenwasserstoffgas einer Wasserdampfreformierung unterzogen wird. Die Dampfreformierung findet bei Temperaturen zwischen 600°C und 1600°C statt. Die den Reformer verlassende Gasmischung gelangt in eine Kohlenmonoxid-Shiftstufe, in der bei Temperaturen zwischen 180°C und 450°C die entsprechende Shiftreaktion abläuft. Anschließend wird der Wasserstoff wahlweise mittels einer Druck-Schwing-Adsorptionseinheit, einer Flüssigkeitsadsorptionseinheit oder mittels einer für Wasserstoff durchlässigen Membran aus dem Produktgas weitgehend entfernt. Das wasserstoffarme Reaktionsgas wird komprimiert, mit einem Abgaswärmetauscher vorgeheizt, mit einem sauerstoffhaltigen Gas vermischt und anschließend in einer Verbrennungszone verbrannt. Die entstehende Wärme wird der Reformerstufe zugeführt. Das bei der Verbrennung des wasserstoffarmen Reaktionsgases entstandene Abgas kann dabei ferner einer gesonderten Verbrennungszone zugeführt werden, um dann gemeinsam mit einem separat zugeführten Heizgas als Moderatorgas zu dienen.

Die US 5,221,524 beschreibt ferner ein Verfahren zur Erzeugung von Wasserstoff mit Hilfe der Dampfreformierung von Methanol bzw. Methanol-Wasser-Gemischen. Die Kohlenmonoxid-Konvertierung erfolgt bei diesem Verfahren in einer Stufe.

Nach der DE 199 54 871 A1 ist darüber hinaus ein Verfahren zur Gewinnung von Wasserstoff aus Kohlenwassserstoffgasen mittels Dampfreformierung bekannt. Die Kohlenwasserstoffe werden dabei mit Wasserdampf bei Temperaturen von 400°C bis 600°C in Gegenwart eines Katalysators zu einem wasserstoffreichen Synthesegas reformiert. Anschließend erfolgt die Trennung des Gasstromes in einen Wasserstoffstrom und einen Restgasstrom. Der Restgasstrom wird erneut dem Reformer zugeführt. Dabei erfordert die wenigstens teilweise Rückführung des Restgases eine Reduzierung des Kohlendioxid-Gehalts, die durch eine physikalische Wäsche erreicht wird. Außerdem wird das gereinigte Restgas anschließend zur Kompensation von Druckverlusten verdichtet und wahlweise dem Reformer oder auch einem Brenner zugeführt.

In der EP 0 913 357 A1 wird ein Apparat zur Erzeugung von Wasserstoff beschrieben, der über ein oder mehrere elektrische Heizelemente verfügt. Es werden verschiedene Anordnungen in Bezug auf die Lage gegenüber den verschiedenen Reaktionsstufen gezeigt und auch die mögliche Integration des Heizelementes in die Katalysatoren erläutert. Dies kann beispielsweise durch die Verwendung gesinterter Werkstoffe erfolgen. Die Temperatur im Reformer beträgt bei diesem Apparat 500°C und mehr, während für die Kohlenmonoxid-Shiftreaktion bzw. die Gasfeinreinigung (SelOx-Stufe) ein Temperaturbereich unter 300°C offenbart ist.

Die EP 0 529 329 A2 beschreibt schließlich eine Reformeranordnung, die ähnlich einem Plattenwärmetauscher ausgebildet ist. In einem Gestell wechseln sich Reaktionsstufen und Wärmetauscher ab. Der beschriebene Reformer ist für den Einsatz in Verbindung mit einer Phosphorsäure-Brennstoffzelle (PAFC) bestimmt, die im Vergleich zur sogenannten PEM-Brennstoffzelle mit etwa 200°C eine wesentlich höhere Arbeitstemperatur aufweist und damit erheblich unempfindlicher gegenüber Kohlenmonoxid ist. Die erforderliche Gasqualität mit einem Kohlenmonoxidgehalt von weniger als 1 Mol-% kann durch Nachschalten von Shift-Konvertierungsstufen erreicht werden. Der Einsatz einer Kohlenmonoxid-Feinreinigung ist nicht erforderlich.

Da die beim Reformierungsprozess erzeugte Wasserstoffmenge funktional insbesondere von der Temperatur im Reformer abhängt, ist es, wie sich auch aus den genannten Druckschriften ergibt, üblich, den Dampfreformer in einem Temperaturbereich oberhalb von 750°C zu betreiben, weil bei diesen Temperaturen die Reformer-Edukte mit bis zu 80-Mol% in Wasserstoff umgesetzt werden. Im übrigen werden etwa 12-Mol% Kohlenmonoxid und 8-Mol% Kohlendioxid gebildet, wobei ersteres mittels der dem Reformer nachgeschalteten Katalysatorstufen ebenfalls noch in für die Katalysatoren der Brennstoffzelle unschädliches Kohlendioxid umgewandelt wird. Dieser Teilprozess wird als Gasreinigung (in den sogenannten Shift-Stufen) bzw. als Gasfeinreinigung (in der sogenannten SelOx-Stufe) bezeichnet.

Eine Reduzierung der Reformerbetriebstemperatur führt zu einer kontinuierlichen Verringerung der erzeugten Wasserstoffmenge. Diesbezügliche Simulationen haben beispielsweise gezeigt, dass bei einer Reformertemperatur von etwa 400°C lediglich 50-Mol% Wasserstoff erzeugt werden, gleichzeitig aber noch etwa 40-Mol% Kohlenwasserstoffgas nicht umgesetzt bleiben. Der Betrieb eines Reformers in diesem sogenannten Niedertemperaturbereich ist somit unter der Zielsetzung möglichst viel Wasserstoff zu erzeugen, nicht wünschenswert, weshalb dies bisher auch beispielsweise in der stark in der Entwicklung befindlichen Automobilantriebstechnik, wo man sich um eine möglichst effektive Wasserstofferzeugung bemüht, nicht praktiziert wurde.

Beim Betrieb von Brennstoffzellen in Gebäuden zur Erzeugung von Strom und Wärme wird der Reformer zur Zeit, soweit bekannt, aus den erläuterten Gründen ebenfalls in einem Temperaturbereich oberhalb von 750°C betrieben. Dabei ergibt sich zwar, wie erläutert, eine vergleichsweise gute wasserstoffausbeute, gleichzeitig entsteht aber auch eine Kohlenmonoxidkonzentration in Höhe von etwa 12-Mol%. Da Kohlenmonoxid unerwünscht ist, sind dem Reformer in der Regel mindestens zwei Shift-Stufen (Katalysatoren) sowie eine sogenannte SelOx-Stufe nachgeschaltet, die eine Umwandlung des Kohlenmonoxids in Kohlendioxid bewirken. In den einzelnen Stufen ergeben sich dabei durch entsprechende Kühlung aufgrund zwischengeschalteter Wärmetauscher abgestufte Temperaturniveaus von etwa 400°C, 200°C und 100°C. Weniger Katalysatorstufen, die man wegen ihrer Temperaturniveaus auch Hoch- und Niedertemperaturshiftstufen nennt, führen nicht zur gewünschten Gasreinheit, d. h., das auch als Brennstoffzellengift bezeichnete Kohlenmonoxid würde bei der Reduzierung der Shiftstufen nicht mehr im erforderlichen Maße in Kohlendioxid umgewandelt werden.

Da die Brennstoffzellentechnik beim derzeitigen Entwicklungsstand insbesondere beim Gebäudeeinsatz bisher noch vergleichsweise viel Raum in Anspruch nimmt und darüber hinaus Reformertemperaturen im Bereich von 800°C eine entsprechend aufwendige wärmetechnische Isolation erfordern, liegt der Erfindung neben einer an sich bekannten Absenkung der Betriebstemperatur und raumsparenden Zusammenfassung der Shiftstufen die Aufgabe zugrunde, ein Verfahren zur allothermen Dampfreformierung zu schaffen, das den Aufwand zur Handhabung des den Apparat durchströmenden Gasstromes möglichst minimiert und hinsichtlich wärmetechnischer Aspekte einfach auslegbar ist.

Diese Aufgabe wird nach der Erfindung mit einem Verfahren der eingangs genannten Art durch die im Kennzeichen des Anspruchs 1 genannten Merkmale gelöst.

Die erfindungsgemäße Lösung zeichnet sich also zunächst dadurch aus, den (wie beschrieben) an sich weniger vorteilhaften Temperaturbereich von 400°C bis 600°C für den Dampfreformierungsprozess zu nutzen, um aufgrund der sich so ergebenden Reduktion an Kohlenmonoxid (jetzt nur noch etwa 8-Mol%) auf eine Shift-Stufe verzichten bzw. zwei Stufen zu einer zusammenfassen zu können, so dass der Reformer insgesamt eine geringere Baugröße hat, aufgrund der niedrigeren Höchsttemperatur insgesamt weniger Wärmeisolation erfordert und auch die dem Reformer mittels eines Gasbrenners zur Verfügung zu stellende Wärmeleistung geringer bemessen sein kann.

Darüber hinaus ergibt sich aus der Reduzierung der Anzahl der Katalysatorstufen ferner noch der Vorteil, dass sich der Druckverlust innerhalb des erfindungsgemäßen Apparates insgesamt verringert, was sich positiv auf den Wirkungsgrad der Anlage auswirkt.

Der Reformer wird also mit einer Temperatur zwischen 400°C und 600°C betrieben. Dabei entstehen zwischen 50-Mol% und 70-Mol% Wasserstoff, lediglich bis zu 8-Mol% Kohlenmonoxid und zwischen 10-Mol% und 15-Mol% Kohlendioxid. Dabei verbleiben (bei 400°C) immerhin bis zu 40-Mol% Kohlenwasserstoffgas im Reformer-Produkt, das erfindungsgemäß nach Passage der Brennstoffzelle zum Brenner des Reformers als sogenanntes Anodenrestgas rückführ- und dort verbrennbar ist, da sich die den Katalysatorstufen (bzw. der Gasfeinreinigungsstufe) nachgeschaltete Brennstoffzelle gegenüber dem Kohlenwasserstoffgas inert verhält, d. h. das Kohlenwasserstoffgas kann ungehindert von den Katalysatorstufen durch die Brennstoffzelle zum Gasbrenner strömen und dort verbrannt werden.

Darüberhinaus ist vorgesehen, auch Wasserstoffreste der Brennstoffzelle (in der Brennstoffzelle werden regelmäßig etwa nur 70% des zur Verfügung gestellten Wasserstoffs umgesetzt) dem Gasbrenner zuzuführen, da diese zusammen mit dem Kohlenwasserstoffgas gefahrlos mit dem Gasbrenner verbrennbar sind.

Vorzugsweise wird also der gesamte Gasstrom vom Gasanschluß über den Reformer, die Katalysatorstufen und die nachgeschaltete Brennstoffzelle zum Gasbrenner geleitet, ohne dass diesem Gasstrom weitere Stoffströme zu- oder von ihm abgeführt werden.

Die geringere Ausbeute an Wasserstoff ist dabei im häuslichen Bereich insbesondere bei der dezentralen Energieversorgung von Ein- und Zweifamilienhäusern im Vergleich zu den erwähnten Vorteilen, die sich aus der Temperaturreduzierung ergeben, weniger relevant, da ja nicht nur Strom, sondern auch Wärme für das Haus bereitgestellt werden soll.

Ferner ist vorgesehen, der zusammengefaßt ausgebildeten Katalysatorstufe eine sogenannte Gasfeinreinigungsstufe nachzuschalten, um möglicherweise noch nicht katalytisch umgewandeltes Kohlenmonoxid in einem Prozess der sogenannten selektiven Oxidation unter Zufuhr von Luft (Sauerstoff) in Kohlendioxid umzusetzen.

Hinsichtlich der erläuterten Rückführung der sogenannten Anodenrestgase (Kohlenwasserstoffgas und Wasserstoff) zum Gasbrenner ist ferner vorteilhaft vorgesehen, sowohl die Umwandlungsrate des Reformers als auch die Wärmeleistung des Gasbrenners ausschließlich über die Dosierung der Kohlenwasserstoffgaszufuhr zu bestimmen. Es zeigt sich nämlich bei entsprechender wärmetechnischer Auslegung des Reformers, der Katalysatoren, der dazugehörigen Wärmetauscher, der Brennstoffzelle und schließlich des Gasbrenners, dass beim Niedertemperaturbetrieb insbesondere die verbleibende Restmenge an Kohlenwasserstoffgas zum Betrieb des Gasbrenners einsetzbar ist.

In diesem Zusammenhang ist dabei ferner vorgesehen, den Gasbrenner lediglich mit einem einzigen Gasanschluss zu versehen, und zwar einem Anschluss, der zur Entgegennahme des Anodenrestgases direkt mit der Brennstoffzelle verbunden ist. Der Brenner selbst weist dementsprechend keinen separat zu regelnden Gasanschluss auf, d. h. diese Maßnahme reduziert außerdem den apparativen Aufwand der Brennergaszufuhrregelung.

Schließlich ist vorteilhaft vorgesehen, den Reformierungsprozess bei der beschriebenen apparativen Gestaltung der Komponenten, wie folgt, zu starten: Zunächst wird Kohlenwasserstoffgas durch den zum Beginn noch kalten Reformer sowie durch die noch kalte Katalysatorstufe (und gegebenenfalls SelOx-Stufe) geführt, ohne dabei chemisch verändert zu werden. Auch der anschließende Durchgang durch die Brennstoffzelle erfolgt ohne chemische Reaktion. Beim Gasbrenner angelangt, wird das Kohlenwasserstoffgas gezündet und sorgt auf diese Weise für eine Aufheizung des Reformers, der nun (Kohlenwasserstoffgas wird ja, nach wie vor, über den Hauptgasanschluss geliefert) mit dem Reformierungsprozess beginnt, d. h. Kohlenwasserstoffgas und sich in Wasserdampf verwandelndes Wasser werden mit zunehmender Temperatur in steigendem Umfang in Wasserstoff und weitere Reformer-Produkte umgewandelt. Die Menge an nicht umgewandelten Kohlenwasserstoffgas geht dabei von ursprünglich 100% (bei Raumtemperatur) auf etwa 40% (bei 400°C) zurück, d. h. gleichzeitig mit zunehmender Reformierungsrate sinkt die Anodenrestgaszufuhr am Gasbrenner, was bei entsprechender wärmetechnischer Auslegung der Anlagenkomponenten schließlich zu einer stabilen Gleichgewichtslage und somit zu einem stationären Betrieb im Temperaturbereich zwischen 400°C und 600°C führt, wobei der reglungstechnische Aufwand dabei, wie erläutert, vergleichsweise gering ist.

Der Vollständigkeit halber wird noch auf die nachveröffentlichte EP 1 246 286 A1 hingewiesen.

Das erfindungsgemäße Verfahren zur Dampfreformierung wird nachfolgend anhand der zeichnerischen Darstellung eines Ausführungsbeispiels näher erläutert.

Es zeigt
- Fig. 1: schematisch einen Apparat zur Erzeugung von Wasserstoff einschließlich PEM-Brennstoffzelle;
- Fig. 2: den funktionalen Zusammenhang zwischen der Zusammensetzung der Reformer-Produkte und der Temperatur beim Dampfreformierungsprozess und
- Fig. 3: schematisch den zeitlichen Verlauf der Reformertemperatur und der Gasbrennerleistung beim Starten des Dampfreformierungsprozesses.

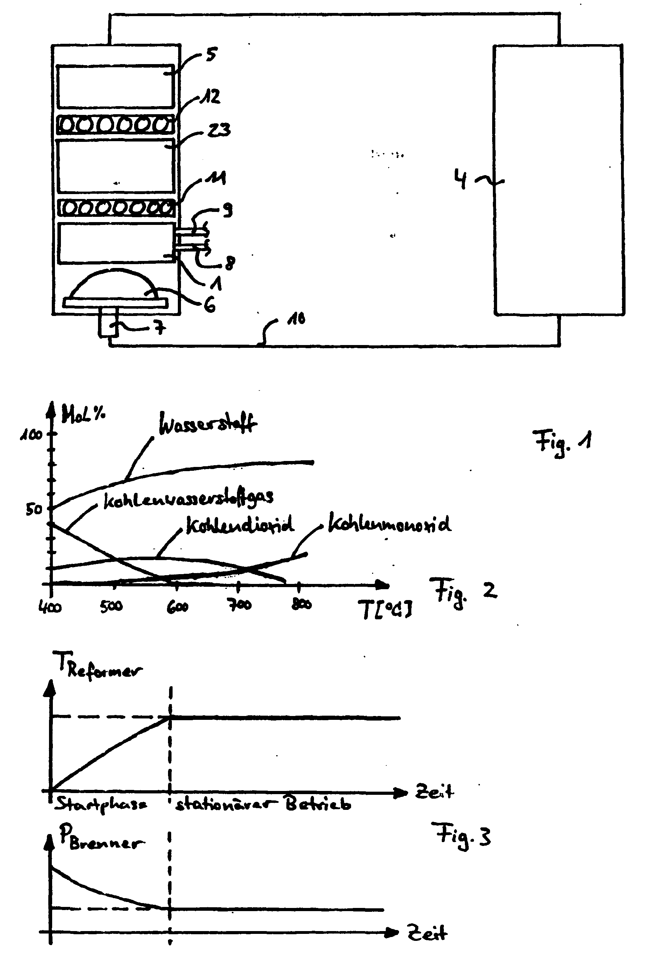

In Fig. 1 ist ein Apparat zur Erzeugung von Wasserstoff zum Betrieb einer Brennstoffzelle 4 dargestellt. Dieser umfasst einen in einem Temperaturbereich von 400°C bis 600°C arbeitenden, allothermen Reformer 1 zur Umwandlung von Kohlenwasserstoffgas und Wasser in Wasserstoff und weitere Reformer-Produkte, wie Kohlenmonoxid und Kohlendioxid, wobei dem Reformer 1 insbesondere zur Reduzierung des Kohlenmonoxidanteils eine reaktions- und temperaturspezifisch angepaßte un in einem Temperaturbereich von etwa 180°C bis 250°C arbeitende Katalysatorstufe 23 nachgeschaltet ist.

Diese Konstruktion führt nicht nur zu einer Einsparung hinsichtlich der Anzahl der Katalysatorstufen und damit einer kompakteren Bauform als bisher, vorteilhaft ist ferner, dass bei dieser Gestaltung zur Kühlung lediglich noch zwei Wärmetauscher 11, 12 erforderlich sind, nämlich einer zwischen dem Reformer 1 und der zusammengefaßten Katalysatorstufe 23 und einer zwischen der Katalysatorstufe 23 und einer vorzugsweise nachgeschalteten Gasfeinreinigungsstufe 5 (sogenannte SelOx-Stufe zur weiteren Umwandlung von Kohlenmonoxid in Kohlendioxid). Der erstgenannte Wärmetauscher 11 bewirkt dabei eine Temperaturreduzierung von etwa 200°C (nämlich von etwa 450°C auf 250°C), während der der Katalysatorstufe 23 nachgeschaltete Wärmetauscher 12 für eine Temperaturreduzierung von etwa 100°C sorgt, bevor die Reformer-Produkte der Gasfeinreinigungsstufe 5 zugeführt werden.

Zum Beheizen des Reformers 1 ist in dessen unmittelbarer Nähe ein aus der Heizkesseltechnik bekannter Gasbrenner 6 angeordnet; beispielsweise, wie zeichnerisch angedeutet, ein sogenannter Matrix-Brenner mit halbkugelförmiger Brennerfläche.

Die Zufuhr des Kohlenwasserstoffgases zum Reformer erfolgt über den Anschluss 8, die Wasserzufuhr über den Anschluss 9, wobei vorteilhaft vorgesehen ist (nicht dargestellt), die Reformer-Edukte getrennt oder auch gemeinsam vorzuheizen, beispielsweise im Gegenstrom mit dem Abgas des Gasbrenners.

Vorgesehen ist ferner, dass im Reformer 1 nicht umgesetztes, die Brennstoffzelle 4 inert durchströmendes Kohlenwasserstoffgas und in der Brennstoffzelle 4 elektrochemisch nicht umgewandelter Wasserstoff dem Gasbrenner 6 als Brenngas (sogenanntes Anodenrestgas) zugeführt werden. Dazu weist der Brenner 6 einen Gasanschluss 7 auf, der über die Verbindungsleitung 10 mit der Brennstoffzelle 4 verbunden ist.

Wie aus Fig. 1 ersichtlich, ist ferner vorgesehen, dass der Gasbrenner 6 lediglich einen, wie erwähnt, mit der Brennstoffzelle 4 verbundenen Gasanschluss 7 aufweist, d. h. der Gasbrenner 6 wird insbesondere nicht separat mit Kohlen-wasserstoffgas beschickt, sondern lediglich mit dem verbleibenen Anodenrestgas betrieben. Dabei ergibt sich insbesondere in reglungstechnischer Hinsicht vorteilhaft, dass sowohl die Leistung des Reformer 1 als auch die des Gasbrenners 6 über die Zufuhr des Kohlenwasserstoffgases (Anschluss 8) zum Reformer 1 bestimmbar ist.

In Fig. 2 ist zur Verdeutlichung der per Computersimulation ermittelte funktionale Zusammenhang zwischen der Zusammensetzung der Reformer-Produkte und der Temperatur beim Reformierungsprozess dargestellt. Aus diesem Diagramm ist ersichtlich, dass im Temperaturbereich zwischen 400°C und 600°C, wie erwähnt, bis zu 40-Mol% an Kohlenwasserstoff der Brennstoffzelle 4 und anschließend dem Gasbrenner 6 zuführbar sind. Je höher die Reformierungstemperatur gewählt wird, desto geringer wird dieser Anteil, was aber gleichzeitig mit einer geringeren Leistung des Brenners 6 einhergeht, woraus wiederum folgt, dass sich je nach Auslegung des Apparats bei einer bestimmten Temperatur ein stabiles Gleichgewicht zwischen Reformierungsrate und Brennerleistung einstellt.

Schließlich ist vorteilhaft vorgesehen, dass zum Starten des Reformierungsprozesses zunächst Kohlenwasserstoffgas durch den kalten Reformer 1 sowie durch die kalte Katalysatorstufe 23 geführt wird, bis es anschließend zur Brennstoffzelle 4 und von dort über die Verbindungsleitung 10 und den Gasanschluss 7 zum Gasbrenner 6 gelangt. Nach der Zündung am Gasbrenner 6 kommt es zu einer Aufheizung des Reformers 1 und somit zu einem allmählichen Start des Reformierungsprozesses. In Fig. 3 sind zwei entsprechende Diagramme dargestellt, wobei sich aus ersterem ergibt, dass die Temperatur des Reformers 1 ab dem Zeitpunkt der Zündung des Gasbrenners 6 kontinuierlich ansteigt, und zwar solange, bis, wie das zweite Diagramm zeigt, der Gasbrenner 6 entsprechend der immer weiter zurückgehenden Anodenrestgasmenge eine kontinuierliche Brennerleistung abgibt, d. h. gerade die beim Reformierungsprozess erforderliche Wärmemenge zur Verfügung stellt.

### Bezugszeichenliste

- 1: Reformer (Dampfreformer)
- 4: Brennstoffzelle
- 5: Gasfeinreinigungsstufe
- 6: Gasbrenner
- 7: Gasanschluss
- 8: Kohlenwasserstoffgasanschluss
- 9: Wasseranschluss
- 10: Verbindungsleitung
- 11: Wärmetauscher
- 12: Wärmetauscher
- 23: Katalysatorstufe

## Patentansprüche

1. Verfahren zur allothermen Dampfreformierung zum Betrieb mindestens einer PEM-Brennstoffzelle (4) zur Strom- und Wärmeversorgung von Gebäuden, bei dem in einem Reformer (1) Kohlenwasserstoffgas und Wasser in Wasserstoff und weitere Reformer-Produkte, wie Kohlenmonoxid und Kohlendioxid, umgewandelt werden, wobei dem mit einem Gasbrenner (6) beheizten Reformer (1) insbesondere zur Reduzierung des Kohlenmonoxidanteils eine reaktions- und temperaturspezifisch angepasste und in einem Temperaturbereich von etwa 180°C bis 250°C arbeitende Katalysatorstufe (23) nachgeschaltet ist, und wobei im Reformer (1) nicht umgesetzten Kohlenwasserstoffgas und von in der Brennstoffzelle elektrochemisch nicht umgewandeltem Wasserstoff dem Gasbrenner (6) als Brenngas zugeführt wird,
**dadurch gekennzeichnet,**
**dass** der Reformer (1) stationär in einem Temperaturbereich von 400°C bis 600°C betrieben wird.

2. Verfahren nach Anspruch 1,
**dadurch gekennzeichnet,**
**dass** die Reformer-Produkte nach der Katalysatorstufe (23) zur weiteren Umwandlung von Kohlenmonoxid in Kohlendioxid einer Gasfeinreinigungsstufe (5) zugeführt werden.

3. Verfahren nach Anspruch 1 oder 2,
**dadurch gekennzeichnet,**
**dass** die Leistung sowohl des Reformers (1) als auch die des ausschließlich von der Brennstoffzelle (4) mit Brenngas (Kohlenwasserstoffgas und Wasserstoff) versorgten Gasbrenners (6) über die Zufuhr des Kohlenwasserstoffgases zum Reformen (1) bestimmt wird.

4. Verfahren nach einem der Ansprüche 1 bis 3,
**dadurch gekennzeichnet,**
**dass** zum Starten des Reformierungsprozesses zunächst Kohlenwasserstoffgas durch den kalten Reformer (1) sowie durch die kalte Katalysatorstufe (23) geführt wird, über die Brennstoffzelle (4) zum Gasbrenner (6) gelangt, dort gezündet wird und auf diese Weise eine allmähliche Erwärmung des Reformers (1) bewirkt, der daraufhin mit Zunahme der Wasserdampfmenge Kohlenwasserstoffgas und Wasser in Wasserstoff und weitere Reformer-Produkte umwandelt, wobei sich im Temperaturbereich zwischen 400°C und 600°C ein Gleichgewicht zwischen dem Reformierungsprozess und der vom Gasbrenner (6) erbrachten Wärmeleistung einstellt.

## Claims

1. Method for allothermal steam reformation for operating at least one PEM fuel cell (4) for the supply of power and heat to buildings, in which hydrocarbon gas and water are converted to hydrogen and further reformer products, such as carbon monoxide and carbon dioxide, wherein a reaction- and temperature-specifically adapted catalyst stage (23) is connected downstream from the reformer (1) heated with a gas burner (6), particularly to reduce the proportion of carbon monoxide, the catalyst stage operating within a temperature range of approx. 180°C to 250°C, and wherein hydrocarbon gas not converted in the reformer (1) and hydrogen not converted electrochemically in the fuel cell are fed to the gas burner (6) as fuel gas,
**characterised in**
**that** the reformer (1) is operated stationarily within a temperature range of 400°C to 600°C.

2. The method according to Claim 1,
**characterised in**
**that** the reformer products are fed to a gas refining stage (5) after the catalyst stage (23) for further conversion of carbon monoxide to carbon dioxide.

3. The method according to Claim 1 or 2,
**characterised in**
**that** the output of both the reformer (1) and the gas burner (6) supplied exclusively from the fuel cell (4) with fuel gas (hydrocarbon gas and hydrogen) is determined by the supply of the hydrocarbon gas to the reformer (1).

4. The method according to one of Claims 1 to 3,
**characterised in**
**that** in order to start the reforming process hydrocarbon gas is first fed through the cold reformer (1) and through the cold catalyst stage (23), reaches the gas burner (6) via the fuel cell (5), is ignited there and gradual heating of the reformer (1) is effected in this manner, which reformer then converts hydrocarbon gas and water to hydrogen and further reformer products with the increase in the quantity of water vapour, wherein an equilibrium is established in the temperature range of between 400°C and 600°C between the reforming process and the heating power produced by the gas burner (6).

## Revendications

1. Procédé de reformage allotherme à la vapeur permettant de faire fonctionner au moins une pile à combustible PEM (4) pour l'alimentation en courant et en chaleur de bâtiments, dans lequel, dans un reformeur (1), du gaz hydrocarbure et de l'eau sont transformés en hydrogène et en autres produits reformés comme du monoxyde de carbone et du dioxyde de carbone, un niveau de catalyse (23) adapté spécifiquement à la réaction et à la température pour la réduction de la proportion de monoxyde de carbone et fonctionnant dans une plage de température d'environ 180° C à 250° C étant installé en aval et étant acheminés au brûleur à gaz (6) comme gaz de combustion du gaz hydrocarbure non transformé dans le reformeur (1) et de l'hydrogène non transformé électrochimiquement dans la pile à combustible,
**caractérisé en ce que**
le reformeur (1) fonctionne stationnairement dans une plage de température comprise entre 400° C et 600° C.

2. Procédé selon la revendication 1,
**caractérisé en ce que**
les produits reformés, après le niveau de catalyse (23), sont acheminés, pour une transformation ultérieure du monoxyde de carbone en dioxyde de carbone, vers un niveau de purification du gaz (5).

3. Procédé selon la revendication 1 ou 2,
**caractérisé en ce que**
la performance aussi bien du reformeur (1) que celle du brûleur à gaz (6) alimenté exclusivement en gaz de combustion (gaz hydrocarbure et hydrogène) par la pile à combustible (4) est définie par l'apport de gaz hydrocarbure au reformeur (1).

4. Procédé selon une des revendications 1 à 3,
**caractérisé en ce que,**
pour démarrer le processus de reformage, du gaz hydrocarbure est d'abord conduit dans le reformeur froid (1) ainsi que dans le niveau de catalyse (23) par lequel la pile à combustible (4) arrive au brûleur à gaz (6), y est enflammé et provoque de cette façon un réchauffement progressif du reformeur (1) qui transforme ensuite, au fur et à mesure de l'augmentation de la vapeur d'eau, le gaz hydrocarbure et l'eau en hydrogène et autres produits reformés, tandis qu'il s'établit, dans la plage de température comprise entre 400° C et 600° C, un équilibre entre le processus de reformage et la puissance thermique émise par le brûleur à gaz (6).
